(19) Europäisches Patentamt / European Patent Office / Office européen des brevets

(11) **EP 2 487 815 B1**

(12) **EUROPÄISCHE PATENTSCHRIFT**

(45) Veröffentlichungstag und Bekanntmachung des Hinweises auf die Patenterteilung:
**07.06.2017 Patentblatt 2017/23**

(51) Int Cl.:
*H04B 10/2513* [(2013.01)]     *H04B 10/2525* [(2013.01)]

(21) Anmeldenummer: **11000930.5**

(22) Anmeldetag: **05.02.2011**

(54) **Verfahren zur Erzeugung und/oder Kompensation von Dispersion in optischen Langstreckenübertragungssystemen**

Method for generating and/or compensating for dispersion in optical long-distance transmission systems

Procédé de production et/ou de compensation de dispersion dans des systèmes optiques de transmission à trajectoire longue

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.08.2012 Patentblatt 2012/33**

(73) Patentinhaber: **Deutsche Telekom AG 53113 Bonn (DE)**

(72) Erfinder:
• **Schneider, Thomas
14552 Michendorf OT Wilhelmshorst (DE)**
• **Jamshidi, Kambiz
04277 Leipzig (DE)**

(74) Vertreter: **Braun-Dullaeus Pannen
Patent- und Rechtsanwälte
Platz der Ideen 2
40476 Düsseldorf (DE)**

(56) Entgegenhaltungen:
**US-A1- 2003 152 320**

• **JAMSHIDI K ET AL: "Very large, tunable, positive and negative group delay for high-bandwidth signals", OPTICAL COMMUNICATION (ECOC), 2010 36TH EUROPEAN CONFERENCE AND EXHIBITION ON, IEEE, PISCATAWAY, NJ, USA, 19. September 2010 (2010-09-19), Seiten 1-3, XP031789539, ISBN: 978-1-4244-8536-9**
• **SAPERSTEIN R E ET AL: "Time-domain waveform processing by chromatic dispersion for temporal shaping of optical pulses", JOURNAL OF THE OPTICAL SOCIETY OF AMERICA B (OPTICAL PHYSICS) OPT. SOC. AMERICA USA,, Bd. 22, Nr. 11, 1. November 2005 (2005-11-01), Seiten 2427-2436, XP002638076,**

**Beschreibung**

Die Erfindung betrifft ein Verfahren zur Erzeugung und/oder Kompensation von Dispersion, welches unter anderem in optischen Langstreckenübertragungssystemen eingesetzt werden kann.

Um Information über lange Strecken zu transportieren werden insbesondere optische Fasern verwendet. Optische Fasern zeichnen sich dabei durch geringe Verluste sowie die Möglichkeit zur Übertragung von hohen Bandbreiten aus. In einem optischen Übertragungssystem sind dabei verschiedenartige Untersysteme vorgesehen, um die Übertragung zu ermöglichen. Optische Leitungen sind ausgebildet, um optische Daten, die z.B. von einer elektrischen Eingabequelle erzeugt sind, über eine optische Faser zu übermitteln. Optische Empfänger sind vorgesehen, die optischen Daten in elektrische Signale umzuwandeln, um den Informationsgehalt zu ermitteln. Verschiedene Komponenten werden dabei in den Übertragungssystemen verwendet, wie Laser, Modulatoren und Photodetektoren. Eines der Hauptziele eines optischen Faserübertragungssystems ist es, die Daten mit einem Minimum an Verfälschung zu übertragen.

Dabei ist eine Anzahl von Eigenschaften vorhanden, die den optischen Fasern innewohnen und die Form des übertragenen Signals stören, einschließlich der Dispersion und des Kerr-Effekts. Dispersion führt dabei über die Veränderung der spektralen Phase zu einer Änderung der zeitlichen Form des Signals und dadurch zu Empfangsfehlern. Dies wird durch unterschiedliche Faktoren verursacht, beispielsweise durch die frequenzabhängige Ausbreitungsgeschwindigkeit von Licht in den Fasern. Die hauptsächlich zu beachtenden Faktoren eines üblichen optischen Faserübertragungssystems stammen von der Dispersion zweiten Grades, wobei eine höhergradige Dispersion auch bedeutsam ist bei hohen Übertragungsraten und/oder hohen Entfernungen.

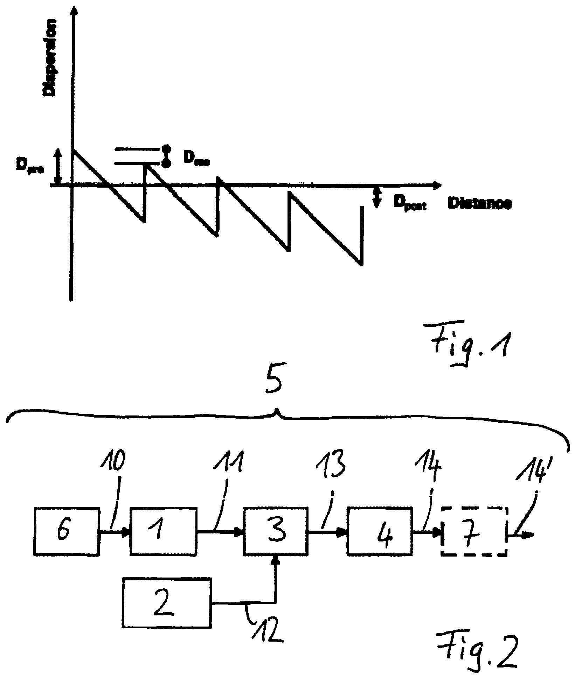

Bei Kurzstreckenübertragungen besteht häufig keine Veranlassung, die Lichtpulse unterwegs zu rekonstruieren, so dass diese als Single-Span-Systeme bezeichnet werden. In einer optischen Langstreckenverbindung wird das übertragene Signal nach einer bestimmten Strecke (z.B. 80 oder 100 km) rekonstruiert, so dass Langstreckenverbindungen als Multi-Span-Systeme bezeichnet werden können. Üblicherweise wird eine Kompensation der Dispersion an dem Ort der Rekonstruktion jedes Spans durchgeführt. Die Kompensation der Dispersion kann aber auch am Sender ($D_{pre}$) oder am Empfänger ($D_{post}$) durchgeführt werden. Die Differenz der Dispersion, die in jedem Span erzeugt wird zur kompensierten Dispersion an jedem Ort des rekonstruierten Signals (die in allen Spans akkumulierte Dispersion $D_{akk}$) wird als residuelle Dispersion ($D_{res}$) bezeichnet. Die Veränderung der Dispersion über die Entfernung wird als Dispersionsabbild bezeichnet. Ein Beispiel eines solchen Dispersionsabbilds ist in Fig. 1 dargestellt. Darin ist die Veränderung der akkumulierten Dispersion über die Distanz ersichtlich.

Die Verbesserung des Dispersionsabbildes von Langstreckenübertragungssystemen ist seit einigen Jahren im Fokus der Forschung. Dabei sind einige Faktoren in der Entwicklung des Dispersionsabbildes vorhanden, die die Leistungsfähigkeit von Langstreckenübertragungssystemen betreffen, einschließlich der Pre- ($D_{pre}$) und Postdispersion ($D_{post}$) der gesamten Verbindung sowie der residuellen Dispersion ($D_{res}$) und der akkumulierten Dispersion ($D_{akk}$) sämtlicher Spans. Das Einstellen dieser Parameter ist von großer Bedeutung, da unterschiedliche Modulierungsformate und Übertragungsraten üblicherweise unterschiedliche Parameter für einen optimalen Betrieb voraussetzen. Die akkumulierte Dispersion aller Spans hängt insbesondere von der Art der Faser ab, die für die Übertragung verwendet wird. Veränderungen der anderen Parameter erfordern eine einstellbare Dispersionserzeugung.

Unterschiedliche Komponenten wurden eingeführt, um die Dispersion zu kompensieren. Die verfügbaren Technologien sind unter anderem:

- Dispersion compensating fibres (DCF),
- Chirped fibre grating (CFG),
- Arrayed wave guide grating (AWG),
- Virtually imaged phase array (VIPA).

Insbesondere ist die Kompensation der Dispersion zweiten Grades die Hauptaufgabe solcher Komponenten, da dieser Effekt vorwiegend in kommerziellen Systemen auftritt.

Eine einfache Vorrichtung zur Erzeugung oder Kompensation der residuellen Dispersion an jedem Span kann den Freiheitsgrad zur Optimierung der Leistung des gesamten Übertragungssystems erhöhen. Dabei sind einige Systeme bekannt, die eine einstellbare Dispersion erzeugen bzw. kompensieren. Die bislang verfügbaren einstellbaren Dispersionskompensatoren können allerdings nur relativ wenig Dispersion kompensieren und sind meist so ausgeführt, dass sie nur Dispersion 2. Ordnung kompensieren können.

In der nachveröffentlichten deutschen Patentanmeldung 10 2009 050 051 wurde ein Verfahren zur Verzögerung optischer Signale beschrieben. Dabei wird ein ursprüngliches Eingangssignal zur Aufspaltung in Frequenzanteile einem Element mit starker Dispersion ausgesetzt. Danach werden Frequenzanteile mittel eines Schaltelements extrahiert. Einzelne extrahierte Frequenzanteile werden anschließend einem Element mit einer Dispersion umgekehrten Vorzeichens ausgesetzt. Dieses Verfahren eignet sich nur zur Speicherung optischer Signale, nicht aber zur Dispersionskompensation.

Die Veröffentlichung "Very large, tunable positive and negative group delay for highbandwidth signals" (Jamshidi, K et al.) offenbart ein Verfahren zur Verzögerung und Beschleunigung von Lichtpulsen durch gezielten Einsatz von Dispersion. Es wird ein Lichtpuls einem ersten dispersiven Medium mit einer erster Dispersion und dann einem zweiten dispersiven Medium mit einer zweiten Dispersion zugeführt, wobei die beiden Dispersionen entgegengesetzte Vorzeichen aufweisen.

Auch die US 2003/152320 A1 zeigt ein Verfahren, mit dem die Dispersion auf aufwendige Weise zumindest im Falle kurzer Übertragunstrecken teilweise kompensiert werden kann.

Es ist Aufgabe der Erfindung, ein verbessertes Verfahren zur Übertragung von Lichtpulsen in einem Langstreckenübertragstunsystem bereitzustellen.

Diese Aufgabe wird gelöst durch ein Verfahren zur Übertragung von Lichtpulsen in einem Langstreckenübertragungssystem nach Anspruch 1 und eine entsprechende Vorrichtung nach Anspruch 3.

Bei dem Verfahren wird ein Eingangssignal einem ersten Übertragungselement mit einer ersten Dispersion ausgesetzt wird, wodurch ein transformiertes Signal erzeugt wird. Durch einen, insbesondere elektrischen, Signalgeber wird ein Steuersignal erzeugt. Das Steuersignal ist vorzugsweise ein elektrisches Signal. Das transformierte Signal wird in Abhängigkeit des Steuersignals moduliert, wodurch ein moduliertes Signal erzeugt wird. Anschließend wird das modulierte Signal einem zweiten Übertragungselement einer zweiten Dispersion ausgesetzt, wodurch ein Ausgangssignal erzeugt wird. Die zweite Dispersion weist dabei ein bezüglich der ersten Dispersion entgegengesetztes Vorzeichen auf und ist im wesentlichen betragsgleich zur ersten Dispersion. Ein Dispersionsgrad des Ausgangsignals wird durch Verändern des Steuersignals angepasst.

Im Gegensatz zum Verfahren gemäß der deutschen Patentanmeldung 10 2009 050 051 wird bei dem erfindungsgemäßen Verfahren insbesondere durch das Anlegen nichtlinearer elektrischer Signale eine Dispersionskompensation erzielt. Dabei werden keine Frequenzen aus dem Signal herausgeschnitten. Insbesondere werden vielmehr die Frequenzanteile in ihrer Phasenbeziehung zueinander verändert. Diese veränderte Phasenbeziehung entspricht einer Dispersion, die insbesondere zu einer Änderung der zeitlichen Form der Signale führt.

Der Kern der Erfindung liegt insbesondere darin, dass die Erzeugung oder Kompensation der Dispersion auf einer Frequenz-in-Zeit-Umwandlung (frequency-to-time-conversion, FTTC) basiert. Ebenfalls können auch andere Anwendungen möglich sein, wie z.B. die Dispersionskompensation von Lichtpulsen in modengekoppelten Lasern. Verglichen mit anderen einstellbaren Dispersionskompensatoren, die üblicherweise nur die Dispersionen zweiten Grades einstellen können, hat das erfindungsgemäße Verfahren die Fähigkeit, sowohl Dispersionen zweiten Grades als auch höhergradige Dispersionen in feinen Schritten zu verändern. Für eine Dispersion 2. Grades benötigt man insbesondere ein quadratisch von der Zeit abhängiges elektrisches Signal am Modulator, für eine Dispersion 3. Grades ein kubisches usw. Mischformen können alle Dispersionen gleichzeitig kompensieren. Gleichzeitig führt ein lineares Signal zu einer Zeitverschiebung des Signals. Dieses Verfahren hat damit das Potential eines der Schlüsselelemente in Langstreckenverbindungen zu sein. Als Ergebnis soll ein Ausgangssignal ausgegeben werden, welches weitgehend dem Eingangssignal entspricht. Dabei ist das Verfahren offen für unterschiedliche Übertragungsraten, was bedeutet, dass das vorgeschlagene Verfahren unabhängig von der Übertragungsrate des Eingangssignals durchgeführt werden kann.

Verglichen mit der vorhandenen Infrastruktur von optischen Faserübertragungssystemen ist nur ein Phasenmodulator an jedem Span erforderlich, um anhand des vorgeschlagenen Verfahrens Dispersionen zu erzeugen oder zu kompensieren.

Ferner kann durch das vorgeschlagene Verfahren ein definiertes Ausmaß an Dispersion n-ten Grades zu dem ursprünglichen Datenstrom hinzugefügt werden. Dadurch dass die Dispersion n-ten Grades die Phasenverschiebung n-ten Grades der spektralen Komponenten des Signals ist, kann eine exakte Phasenänderung in der Wellenform n-ten Grades zu dem Spektrum des ursprünglichen Signals hinzugefügt werden. Das vorgeschlagene Verfahren basiert auf dem Abbilden der unterschiedlichen Frequenzen des Signalspektrums in unterschiedlicher Zeit über ein dispersives Medium, welches als Frequenz-in-Zeit-Umwandlung (frequency-to-timeconversion, FTTC) bezeichnet wird. Dafür kann das gewünschte Spektrum des originalen Signals im Zeitbereich durch Modulierung des dispersiven Signals verändert werden. So kann die exakte Phsenverschiebung n-ten Grades zum ankommenden Signal dem Zeitbereich hinzugefügt werden, was in einer Phasenverschiebung n-ten Grades des originalen Signalspektrums aufgrund des FTTC-Abbildes resultiert. Dies kann ferner zu der Erzeugung von Dispersion n-ten Grades führen. Die Modulation kann über elektrooptische oder optische Modulatoren erfolgen, insbesondere anhand des nicht-linearen Kerr-Effekts, um höhere Anteile von Dispersion zu erzeugen. Eine Zeit-in-Freuquenz-Umwandlung (timetofreuquency-conversation, TTFC) sollte anschließend verwendet werden, um das im

Zeitbereich ankommende Signal in den Spektralbereich zu wandeln, und das ursprüngliche Signal zu rekonstruieren.

Erfindungsgemäß ist die zweite Dispersion im wesentlichen betragsgleich zur ersten Dispersion. Die natürliche Dispersion der Übertragungsfasern kann mit einberechnet werden.

Das Verfahren der beschriebenen Art wird erfindungsgemäß mehrfach nacheinander durchgeführt. Dies ist für das Langstreckenübertragungssysteme von Vorteil, da sich für FTTC und TTFC die ohnehin vorhandene Dispersion der verlegten Fasern und DCF-Module nutzen lässt. Dabei wird ein Ausgangssignal eines Verfahrens der beschriebenen Art als Eingangssignal eines nachfolgenden Verfahrens der beschriebenen Art verwendet.

Die Erfindung betrifft ferner eine Vorrichtung zur Langstreckenübertragung von Lichtpulsen mit einer Lichtübertragungseinheit, wobei die Lichtübertragungseinheit umfasst:

eine Lichtpulsquelle zur Erzeugung eines Eingangssignals, ein erstes Übertragungselement mit einer ersten Dispersion, das sich an die Lichtpulsquelle anschließt, eine Steuersignalquelle zur Erzeugung eines Steuersignals, einen Modulator, der sich an das erste Übertragungselement anschließt und das vom ersten Übertragungselement ausgegebene Signal in Abhängigkeit des Steuersignals moduliert, ein zweites Übertragungselement mit einer zweiten Dispersion, welches sich an den Modulator anschließt. Die zweite Dispersion weist ein bezüglich der ersten Dispersion entgegengesetztes Vorzeichen auf und ist im wesentlichen betragsgleich zur ersten Dispersion. Die erfindungsgemäße Vorrichtung ist dadurch gekennzeichnet, dass mehrere, insbesondere mehr als eine solcher Lichtübertragungseinheiten nacheinander geschaltet sind. Hierdurch kann ein Langstreckenübertragungssystem gebildet werden, welches die Vorteile und weiteren Anwendungsmöglichkeiten des beschriebenen Verfahrens bieten kann.

Die Erfindung wird nachfolgend anhand der Figuren näher erläutert. Hierin zeigt

Fig. 1      die Akkumulierung der residuellen Dispersion;

Fig. 2      ein Blockschaltbild zur Durchführung des erfindungsgemäßen Verfahrens;

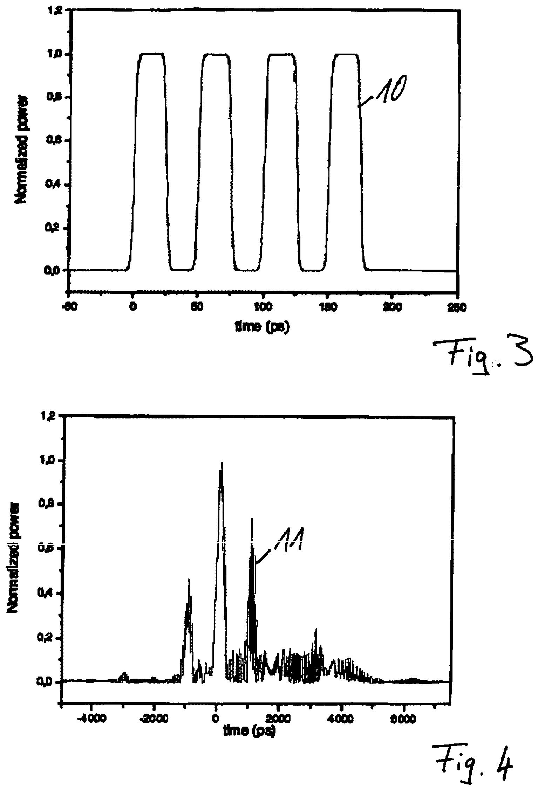

Fig. 3      das Eingangssignal;

Fig. 4      das transformierte Signal;

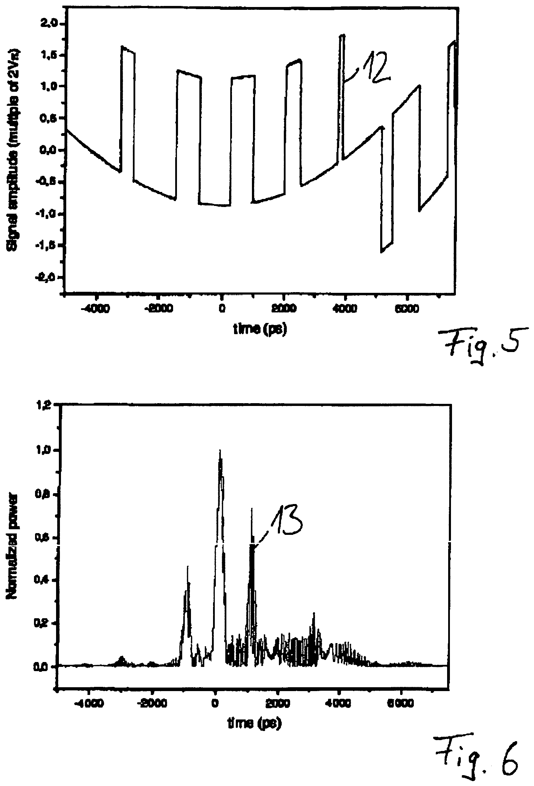

Fig. 5      das Steuersignal;

Fig. 6      das modulierte Signal;

Fig. 7      das Ausgangssignal;

Fig. 8      das Ausgangssignal nach Kompensation der Dispersion.

In dem Blockschaltbild nach Fig. 2 wird ein Eingangssignal 10 durch eine Lichtpulsquelle 6 erzeugt. Die Lichtpulsquelle 6 kann dabei eine Lichtquelle (z.B. ein Halbleiterlaser) sein, welche Licht im nahen Infrarotbereich des elektromagnetischen Spektrums erzeugt. Es ist aber auch möglich, dass das Eingangssignal einem Ausgangssignal eines vorgeschalteten Übertragungselements entspringt. Dann kann das vorherige Übertragungselement als Lichtpulsquelle angesehen werden. Das Eingangssignal 10 wird einem ersten Übertragungselement 1 zugeführt, welches ein Lichtleiter sein kann, der das Licht über eine gewisse Distanz übermitteln kann. Das erste Übertragungselement 1 weist eine erste Dispersion $D_1$ auf. Am Ende des ersten Übertragungselements 1 verlässt das erste Übertragungselement 1 ein transformiertes Signal 11. Das erste Übertragungselement 1 umfasst eine hohe Dispersion, die das Spektrum des ankommenden Signals 11 im Zeitbereich abbildet. Das erste Übertragungselement 1 kann insbesondere jegliche Komponente sein, die ein großes Ausmaß an Dispersion dem ankommenden Signal zufügt. Dies können CFG, AWG, VIPA, 4F-lens-grating pair mit Flüssigkristallmodulation oder Phasenmasken im Zentrum, feststoffoptische Etalons, Ringresonatoren, Standard-Single-Mode-Fasern, usw. sein.

Das transformierte Signal 11 wird einem Modulator 3 zugeführt. Dem Modulator 3 wird ferner ein Steuersignal 12 zugeführt, welches von einer Steuersignalquelle 2 erzeugt wird. Die Steuersignalquelle 2 kann eine elektrische oder optische Quelle sein, die ein elektrisches oder optisches Signal der gewünschten Form erzeugt. Insbesondere ein elektrisches Steuersignal kann eine exakte Kurve n-ten Grades sein, um eine Dispersion n-ten Grades zu erzeugen. Die exakte Kurve n-ten Grades kann durch ein Polynom n-ten Grades gebildet sein. Ein Sägezahnprofil (Polynom 1. Grades) würde eine Verzögerungen bzw. Beschleunigung des Signals erzeugen, ein Polynom 2. Grades eine quadratische Dispersion erzeugen bzw. kompensieren usw. Der Modulator 3 moduliert dabei das ankommende transformierte Signal 11 in Abhängigkeit des Steuersignals 12 und gibt anschließend ein moduliertes Signal 13 aus. Der Modulator 3 kann insbesondere das elektrische Signal mit der Phase des einkommenden optischen Signals multiplizieren. Es können aber auch sämtliche anderen optischen Methoden, mit denen die Signalphase verändert werden kann, angewendet werden.

Das modulierte Signal 13 wird einem zweiten Übertragungselement 4 zugeführt, welches im Wesentlichen analog zum ersten Übertragungselement 1 ausgebildet sein kann. Das zweite Übertragungselement 4 ist dabei insbesondere ein hochdispersives Medium mit einer, verglichen mit dem ersten Übertragungselement 1, entgegengesetzt gerichteten Dispersion gleichen Betrags. Ohne ein elektrisches Signal 12 am Modulator 3 würde das Signal 14 wieder dem Eingangssignal 10 entsprechen. Durch das elektrische Signal 12 wird dem optischen Signal 14 eine beliebige Dispersion aufgeprägt, die zu einer Kompensation der Gesamtdispersion entlang der restlichen Übertragungsstrecke führt, oder/und es kann eine vorher auf dem Signal befindliche Dispersion kompensiert werden. Am Ende des zweiten Übertragungselementes 4 verlässt ein Ausgangssignal 14 das zweite Übertragungselement 4.

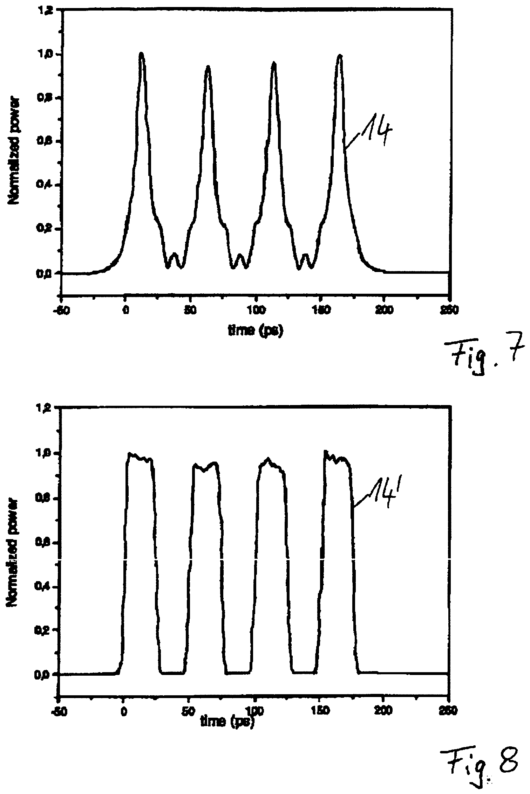

In Fig. 7 wird das Ausgangssignal 14 gezeigt, welches dispersiert ist. Das Ausmaß der hergestellten Dispersion zweiten Grades kann spezifiziert werden als:

$$\frac{1}{2\pi} \cdot \frac{\lambda^2}{c} \cdot D^2 \cdot \frac{\partial^2 \varphi}{\partial t^2}$$

Dabei ist c die Lichtgeschwindigkeit, □ die Wellenlänge des Lichts, D die Dispersion, verwendet für FTTC und TTFC, $\delta p^2 / \delta t^2$ die Kurve des Steuersignals, im vorliegenden Fall des quadratischen elektrischen Signals. Es ist zu erkennen, dass durch Verändern der Kurve des Steuersignals 12 der gewünschte Wert der Dispersion eingestellt werden kann. Dieses Signal besitzt nun z.B. eine Dispersion 2. Grades die genau so groß gewählt wurde, dass sie durch die Dispersion der restlichen Übertragungsstrecke des Signals kompensiert wird. Das Ausgangssignal 14 hat durch seine Dispersion eine veränderte zeitliche Form, wie Fig. 7 zeigt. Die restliche Dispersion der Übertragungsstrecke ist der Block 7 in Figur 2 . Wie man anhand von Figur 8 sieht, ist die dem Signal aufgeprägte Dispersion also so groß, dass sie in der Lage ist am Ausgang der Übertragungsstrecke zu einem unverzerrten Signal 14' zu führen.

Die Lichtpulsquelle 6, das erste Übertragungselement 1, der Steuersignalgeber 2, der Modulator 3 und das zweite Übertragungselement 4 stellen eine Lichtübertragungseinheit 5 als Span dar. In einem System zur Langstreckenübertragung von Lichtpulsen sind mehrere solcher Lichtübertragungseinheiten 5 hintereinander geschaltet. Dabei kann ein Ausgangssignal 14, 14' der vorhergehenden Lichtübertragungseinheit 5 als Eingangssignal 10 der nachfolgenden Lichtübertragungseinheit 5 dienen. Insofern ist es nicht erforderlich, dass in jeder Lichtübertragungseinheit 5 ein Eingangssignal von einer Lichtquelle primär erzeugt wird; vielmehr kann das Eingangssignal auch Licht sein, welches von einem vorhergehenden Übertragungselement ausgegeben wird.

**Bezugszeichenliste**

1    erstes Übertragungselement
2    Steuersignalgeber
3    Modulator
4    zweites Übertragungselement
5    Lichtübertragungseinheit
6    Lichtpulsquelle
7    Dispersionskompensator

10    Eingangssignal
11    transformiertes Signal
12    Steuersignal
13    moduliertes Signal
14    Ausgangssignal

D    Dispersion

**Patentansprüche**

1.  Verfahren zur Übertragung von Lichtpulsen in einem Langstreckenübertragungssystem, **dadurch gekennzeichnet, dass**

    - dass ein Eingangssignal (10) einem ersten Übertragungselement (1) mit einer ersten Dispersion ($D_1$) ausgesetzt wird, wodurch ein transformiertes Signal (11) erzeugt wird,
    - dass ferner durch einen Signalgeber (2) ein Steuersignal (12) in Form einer Kurve n-ten Grades erzeugt wird,
    - wobei anschließend das transformierte Signal (11) in Abhängigkeit des Steuersignals (12) moduliert wird, wodurch ein moduliertes Signal (13) mit einer Dispersion n-ten Grades erzeugt wird,
    - dass anschließend das modulierte Signal (13) einem zweiten Übertragungselement (4) mit einer zweiten Dispersion ($D_2$) ausgesetzt wird, wodurch ein Ausgangssignal (14) erzeugt wird,
    - dass die zweite Dispersion ($D_2$) ein bezüglich der ersten Dispersion ($D_1$) entgegengesetztes Vorzeichen aufweist,
    - dass ein Dispersionswert des Ausgangssignals (14) durch Verändern des Steuersignals (12) angepasst wird,

    wobei der genannte Verfahrensablauf mehrfach nacheinander durchgeführt wird, wobei das Ausgangssignal (14) eines Verfahrens als Eingangssignal (11) eines nachfolgenden Verfahrensablaufs verwendet wird.

2.  Verfahren nach dem vorherigen Anspruch, **dadurch gekennzeichnet, dass** der Dispersionswert des Ausgangssignals (14) durch Verändern einer Wellenform des Steuersignals (12) angepasst wird.

3.  Vorrichtung zur Langstreckenübertragung von Lichtpulsen mit einer Lichtübertragungseinheit (5), wobei die Lichtübertragungseinheit (5) umfasst:

    eine Lichtpulsquelle (6) zur Erzeugung eines Einganssignals (10),
    ein erstes Übertragungselement (1) mit einer ersten Dispersion ($D_1$), das sich an die Lichtpulsquelle (6) anschließt,
    eine Steuersignalquelle (2) zur Erzeugung eines Steuersignals (12) in Form einer Kurve n-ten Grades,
    einen Modulator (3), der sich an das erste Übertragungselement (1) anschließt und das vom ersten Übertragungselement (1) ausgegebene Signal (11) in Abhängigkeit des Steuersignals (12) mit einer Dispersion n-ten Grades moduliert,

ein zweites Übertragungselement (4) mit einer zweiten Dispersion (D_1), welches sich an den Modulator (3) anschließt,

wobei die zweite Dispersion (D_2) ein bezüglich der ersten Dispersion (D_1) entgegengesetztes Vorzeichen aufweist,

**dadurch gekennzeichnet, dass**

dass mehrere solcher Lichtübertragungseinheiten (5) nacheinander geschaltet sind.

4. Vorrichtung nach dem vorherigen Anspruch, **dadurch gekennzeichnet,** **dass** der Steuersignalgeber (2) einstellbar ist.

## Claims

1. A method for transmitting light pulses in a long-distance transmission system, **characterized**

   - **in that** an input signal (10) is exposed to a first transmission element (1) with a first dispersion (D_1), as a result of which a transformed signal (11) is generated,
   - **in that** furthermore a control signal (12) in the form of a curve of $n^{th}$ degree is generated by a signal generator (2),
   - wherein following this the transformed signal (11) is modulated as a function of the control signal (12), as a result of which a modulated signal (13) with a dispersion of $n^{th}$ degree is generated,
   - **in that** following this the modulated signal (13) is exposed to a second transmission element (4) with a second dispersion (D_2), as a result of which an output signal (14) is generated,
   - **in that** the second dispersion (D_2) with respect to the first dispersion (D_1) has an opposite sign,
   - **in that** a dispersion value of the output signal (14) is adjusted by varying the control signal (12),

   wherein the mentioned method sequence is carried out multiple times in succession, wherein the output signal (14) of a method is used as input signal (11) of a subsequent method sequence.

2. The method according to the preceding claim, **characterized in that** the dispersion value of the output signal (14) is adjusted by varying a wave form of the control signal (12).

3. A device for the long distance transmission of light pulses with a light transmission unit (5), wherein the light transmission unit (5) comprises:

   a light pulse source (6) for generating an input signal (10),

   a first transmission element (1) with a first dispersion (D_1), which follows the light pulse source (6),

   a control signal source (2) for generating a control signal (12) in the form of a curve of $n^{th}$ degree,

   a modulator (3) which follows the first transmission element (1) and modulates the signal (11) output by the first transmission element (1) as a function of the control signal (12) with a dispersion of $n^{th}$ degree,

   a second transmission element (4) with a second dispersion (D_1), which follows the modulator (3),

   wherein the second dispersion (D_2) with respect to the first dispersion (D_1) has an opposite sign, **characterized in that** a plurality of such light transmission units (5) are connected one after the other.

4. The device according to the preceding claim, **characterized in that** the control signal generator (2) is adjustable.

## Revendications

1. Procédé pour la transmission d'impulsions lumineuses dans un système de transmission à longue distance, **caractérisé en ce que**

   - un signal d'entrée (10) est exposé à un premier élément de transmission (1) avec une première dispersion (D_1), un signal transformé (11) étant produit de ce fait,
   - un signal de commande (12) est en plus produit par un transmetteur de signaux (2) sous la forme d'une courbe du n-ième degré,
   - le signal transformé (11) étant ensuite modulé en fonction du signal de commande (12), un signal modulé (13) étant de ce fait produit avec une dispersion du n-ième degré,
   - le signal modulé (13) est ensuite exposé à un deuxième élément de transmission (4) avec une deuxième dispersion (D_2), un signal de sortie (14) étant produit de ce fait,
   - la deuxième dispersion (D_2) comporte un signe opposé eu égard à la première dispersion (D_1),
   - une valeur de dispersion du signal de sortie (14) est adaptée par modification du signal de commande (12),

   le cycle du procédé cité étant exécuté plusieurs fois à la suite, le signal de sortie (14) d'un procédé étant utilisé en tant que signal d'entrée (11) d'un cycle de procédé suivant.

2. Procédé selon la revendication précédente, **carac-**

**térisé en ce que** la valeur de dispersion du signal de sortie (14) est adapté par modification d'une forme d'onde du signal de commande (12).

3. Dispositif pour la transmission à longue distance d'impulsions lumineuses avec une unité de transmission de lumière (5), l'unité de transmission de lumière (5) comprenant :

  une source d'impulsions lumineuses (6) pour produire un signal d'entrée (10),
  un premier élément de transmission (1) avec une première dispersion ($D_1$), qui se raccorde à la source d'impulsions lumineuses (6),
  une source de signaux de commande (2) pour produire un signal de commande (12) sous la forme d'une courbe du n-ième degré,
  un modulateur (3), qui se raccorde au premier élément de transmission (1) et module le signal (11) émis par le premier élément de transmission (1) en fonction du signal de commande (12) avec une dispersion du n-ième degré,
  un deuxième élément de transmission (4) avec une deuxième dispersion ($D_1$), lequel se raccorde au modulateur (3),
  la deuxième dispersion ($D_2$) comportant un signe opposé eu égard à la première dispersion ($D_1$),
  **caractérisé en ce que**
  plusieurs unités de transmission de lumière (5) de ce type sont commutées l'une derrière l'autre.

4. Procédé selon la revendication précédente, **caractérisé en ce que** le transmetteur de signaux de commande (2) peut être réglable.

Fig.1

Fig.2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009050051
- US 20030152320 A1

**In der Beschreibung aufgeführte Nicht-Patentliteratur**

- **JAMSHIDI, K.** *Very large, tunable positive and negative group delay for highbandwidth signals*